# EUROPÄISCHE PATENTSCHRIFT

(11) **EP 0 706 624 B1**
(45) Veröffentlichungstag und Bekanntmachung des Hinweises auf die Patenterteilung: **22.01.1997**
(21) Anmeldenummer: 94909886.7
(22) Anmeldetag: 04.03.1994
(51) Int. Cl.: F16L 5/02, H02G 3/06, F16B 37/10

(54) **VORRICHTUNG ZUR ABGEDICHTETEN VERLEGUNG VON ROHREN, LEITUNGEN UND DERGLEICHEN**
DEVICE FOR THE SEALED LAYING OF TUBES, PIPES AND THE LIKE
DISPOSITIF PERMETTANT DE POSER DE MANIERE ETANCHE DES TUYAUX, DES CONDUITES ET ANALOGUES

(30) Priorität: 02.07.1993 DE 4322032
(43) Veröffentlichungstag der Anmeldung: 17.04.1996
(73) Patentinhaber: PFLITSCH GmbH. & Co. KG., 42499 Hückeswagen (DE)
(72) Erfinder: PFLITSCH, Otto, D-42499 Hückeswagen (DE)
(74) Vertreter: Köchling, Conrad-Joachim
(86) Internationale Anmeldenummer: DE9400239
(87) Internationale Veröffentlichungsnummer: WO9501528

(56) Entgegenhaltungen:
- EP-A- 0 442 367
- DE-C- 880 526
- DE-C- 3 737 346
- GB-A- 455 165
- US-A- 758 549
- US-A- 3 649 054
- US-A- 4 226 164
- US-A- 4 923 349

## Beschreibung

Die Erfindung betrifft eine Vorrichtung zur abgedichteten Verlegung von Rohren, Leitungen und dergleichen Langformteilen durch Gerätewandung und dergleichen Bauteile, bestehend aus einem Doppelnippel mit endseitigen Gewindestutzen und dazwischen angeordnetem Polygonansatz für ein Werkzeug, wobei der Nippel an seinem einen Ende einen innen umlaufenden Anschlagkragen aufweist, an welchem sich ein Dichtkörper abstützt, der mittels einer auf das andere Ende des Nippels aufschraubbaren Druckschraube in Form einer Überwurfmutter mit Anschlagkragen vorspannbar ist und der vom Rohr, der Leitung oder dem Langformteil durchgreifbar ist, wobei ferner der Dichtkörper mindestens eine in Längsrichtung verlaufende Teilungsfuge aufweist.

Solche Vorrichtungen, auch Kabelverschraubung genannt, sind im Gerätebau üblich und dienen dazu, beispielsweise elastische Rohre, Leitungen, Kabel oder dergleichen abgedichtet durch Gerätewandungen hindurchzuführen.

Solche Vorrichtungen haben sich im Stand der Technik bewährt. Es besteht aber ein Problem insofern, als dann, wenn solche Vorrichtungen nach der erfolgten Installation beschädigt werden oder durch äußere Einflüsse zerstört werden, beispielsweise in chemischen Betrieben, ein Auswechseln von defekten oder zerstörten Vorrichtungen nur mit großem Aufwand möglich ist, da dann die gesamte Elektroinstallation oder dergleichen aufgetrennt werden muß, um die defekte Vorrichtung zu entfernen und eine neue entsprechende Vorrichtung anzuordnen.

Im Stand der Technik (DE 37 37 346 C1) ist schon eine gattungsgemäße Vorrichtung bekannt, bei der der Dichtkörper als in Längsrichtung mindestens einmal, vorzugsweise mittig geteilter Stopfen ausgebildet ist.

Bei dieser Vorrichtung ist es möglich, elektrische Leitungen oder andere Langformelemente mit Anschlußelementen zu verlegen, indem diese durch die entsprechende Lochung des Nippels und der Druckschraube hindurch geführt werden und anschließend der Stopfen in den Nippel eingeschoben wird und die Verschraubung verschraubt wird.

Auch bei dieser bekannten Vorrichtung ist es aber nicht möglich, bestehende Vorrichtungen, die beschädigt oder zerstört sind, in einfacher Weise auszuwechseln.

Aus der US-A-3 649 054 ist eine Kabelbefestigung bekannt, die aus mehreren längsgeteilten Elementen zusammengefügt ist. Dabei ist ein geteiler Dichteinsatz vorgesehen, der von einem ebenfalls geteilten Gewindestutzen aufgenommen wird und mittels einer geteilten Schraube zusammengehalten wird. Bei dieser Ausbildung wird der Zusammenhalt des Gewindestutzens und der Schraube durch Befestigungsschrauben vorgenommen, die so in die Teile eingebracht werden, daß die Teilungsfuge überbrückt und die Teile fest zusammengehalten werden. Diese Anordnung ermöglicht zwar die nachträgliche Anordnung der Einzelelemente auf einem schon verlegten Kabel oder dergleichen, jedoch sind zusätzliche Befestigungsmittel, nämlich mindestens vier Verbindungsschrauben erforderlich, die einer zusätzlichen Handhabung, Herstellung, Lagerhaltung und Anordnung bedürfen. Solche Befestigungsmittel können auch verloren gehen oder sich bei der bestimmungsgemäßen Benutzung der Anordnung selbständig lösen.

Aus der US-A-4 226 164 ist eine aus zwei Halbschalen bestehende Schraube bekannt, die mittels an der Trennfuge verlaufender axialer Führungsstege und -nuten axial zusammengeführt werden kann und in dieser Position mittels Rastmitteln verrastbar ist.

Ausgehend von dem eingangs bezeichneten Stand der Technik liegt der Erfindung die Aufgabe zugrunde, eine Vorrichtung gattungsgemäßer Art zu schaffen, die es erlaubt, bei bestehenden Installationen beschädigte oder zerstörte Vorrichtungen in einfacher Weise auszuwechseln, wobei gewährleistet ist, daß auch im Bereich des Anschlagkragens der Druckschraube die gewünschte Kraftübertragung auf den radial innenliegenden Dichtkörper besonders gut und wirkungsvoll erreicht wird.

Zur Lösung dieser Aufgabe schlägt die Erfindung vor, daß der Doppelnippel und die Druckschraube jeweils aus zwei Teilen mit in Nippellängsrichtung verlaufenden Trennstellen bestehen, wobei die Einzelteile der Druckschraube durch Haltemittel lagerichtig zusammenhaltbar sind, mittels derer die Druckschraube den bei bestimmungsgemäßem Gebrauch auftretenden Kräfte, insbesondere radial nach außen gerichteten Kräften standhält, daß an den Trennstellen der Druckschraube, des Dichtskörpers und/oder des Doppelnippels jeweils in Montagesollage ineinander greifende Führungs- und Positioniermittel angeordnet sind, mittels derer die Teilkörper in der Sollage zueinander gehalten sind, daß die Führungs- und Positioniermittel an den Teilkörpern der Elemente angeformt sind, daß als zusätzliche oder ausschließliche Haltemittel an den Trennstellen der Druckschraube in Längsrichtung derselben verlaufende Führungsleisten und Führungskanäle zur Aufnahme der Führungsleisten angeformt sind, daß die Teilkörper der Druckschraube Anschlag- oder Arretierungsmittel aufweisen, die bei Positionierung der Teilkörper mit zueinander lagerichtigem Gewinde wirksam sind und daß der Anschlagkragen der Teilkörper der Druckschraube an den Trennstellen durch die Trennstellen überbrückende Rastmittel zusammenhaltbar ist.

Durch diese Ausbildung ist es in einfacher Weise möglich, bei defekten Vorrichtungen oder mindestens teilweise zerstörten Vorrichtungen diese gegen eine neue Vorrichtung auszutauschen, indem zunächst die beschädigte Vorrichtung gelöst und mechanisch zerstört wird, um diese von dem entsprechenden Leitungsstrang abzunehmen, wonach dann eine neue erfindungsgemäße Vorrichtung montiert werden kann, indem der Doppelnippel, der Dichtkörper und die Druckschraube radial dem entsprechenden Leitungsstrang zugeführt werden und in geeigneter Weise miteinander verbunden werden. Die erfindungsgemäßen Vorrichtungen sind vorzugsweise aus Kunststoff gefertigt. Durch die erfindungsgemäße Ausbildung wird ein sicherer Zusammenhalt der Einzelteile erreicht, wobei auch gewährleistet ist, daß die Druckschraube bei ihrer bestimmungsgemäßen Verwendung radial nach außen wirkende Kräfte aufnehmen kann. Durch die Anordnung von die Trennstelle überbrückenden Rastmitteln im Bereich des Anschlagkragens ist zudem sichergestellt, daß auch der Anschlagkragen quasi eine feste Einheit bildend zusammenfügbar ist, so daß die gewünschte Kraftübertragung auf den radial innenliegenden Dichtkörper besonders gut und wirkungsvoll erreicht wird.

Bevorzugt ist vorgesehen, daß die Trennstellen abgestuft verlaufen.

Beispielsweise kann eine solche Trennstelle durch einen quasi axial verlaufenden Schnitt gebildet sein, der über seinen Längsverlauf eine Abkröpfung (Stufe) aufweist. Auf diese Weise ist schon eine exakte Ausrichtung der Teile zueinander in einfacher Weise gewährleistet, da durch den Versatz der Trennstelle eine Positionierungshilfe gebildet ist.

Desweiteren ist bevorzugt vorgesehen, daß die Führungs- und Positioniermittel des Doppelnippels und/oder des Dichtkörpers aus ineinandersetzbaren Zapfen und Vertiefungen bestehen.

Die Führungs- und Positioniermittel können als einfache Zapfen und dazu passende Vertiefungen ausgebildet sein, weil bei dem Doppelnippel und dem Dichtkörper lediglich ein paßgenaues Zusammenfügen erforderlich ist, der spätere Zusammenhalt aber durch die aufgeschraubte Druckschraube erfolgt. Es ist daher nicht erforderlich, diese Elemente miteinander zu verrasten oder in sonstiger Weise bleibend miteinander zu verbinden.

Eine bevorzugte Weiterbildung wird darin gesehen, daß die Form der Führungsleisten und Führungskanäle nach Art einer Schwalbenschwanzführung, einer Hammerkopfführung mit gerundeten Hammerkopfkanten oder einer Labyrinthführung ausgebildet sind.

Alternativ kann auch vorgesehen sein, daß die Teilkörper der Druckschraube durch radial innenliegende, die Trennstellen mindestens in Teilbereichen überbrückende Rasthakenelemente zusammenhaltbar sind.

Bevorzugt ist vorgesehen, daß der Anschlagkragen der Teilkörper der Druckschraube an den Trennstellen durch radial innenliegende, die Trennstellen des Anschlagkragens überbrückende Rastmittel zusammenhaltbar ist.

Eine bevorzugte Ausbildung wird darin gesehen, daß der Doppelnippel aus zwei an einer Trennstelle über Filmscharnier verbundenen Teilkörpern besteht.

Dabei ist bevorzugt vorgesehen, daß das Filmscharnier im Bereich des Polygonansatzes radial außenliegend an diesem ausgebildet ist.

In Weiterbildung kann auch vorgesehen sein, daß der Doppelnippel als Winkelverschraubungsteil ausgebildet ist.

Bevorzugt ist ferner vorgesehen, daß zur Verbindung der Teilkörper der Druckschraube stirnseitig Riegel angeordnet sind, die laschenartig die Trennstelle der Einzelelemente überbrücken.

Ausführungsbeispiel der Erfindung sind in der Zeichnung dargestellt und im folgenden näher beschrieben.
Es zeigt:
- Fig. 1: Eine erste Ausführungsform in explosionsartiger Darstellung;
- Fig. 2: einen Schnitt durch die Druckschraube gemäß Figur 1 in der Montagesollage;
- Fig. 3: eine Variante der Druckschraube in Ansicht;
- Fig. 4: einen Schnitt gemäß Figur 2 durch die Druckschraube gemäß Figur 3;
- Fig. 5 und 6: eine Variante gemäß Figur 3 und 4 gesehen;
- Fig. 7 und 8: eine weitere Variante in gleicher Ansicht.

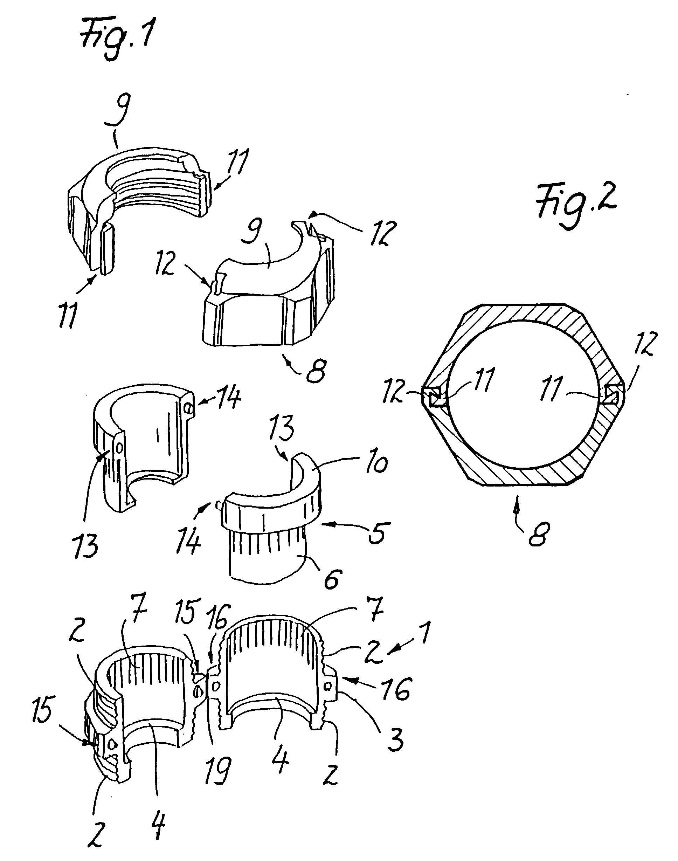

Die Vorrichtung zur abgedichteten Verlegung von Rohren, Leitungen und dergleichen Langformteilen durch Gerätewandungen und dergleichen Bauteile besteht aus einem Doppelnippel 1 mit endseitigen Gewindestutzen 2 und dazwischen, vorzugsweise mittig dazwischen angeordnetem Polygonansatz 3, der als Angriff für ein Werkzeug, insbesondere einen Schraubenschlüssel dient. Der Nippel 1 hat an seinem einen, in Figur 1 untenliegenden Ende eine innen umlaufenden Anschlagkragen 4, an welchem sich in der Montagesollage ein Dichtkörper 5 abstützt, der aus gummielastischem Material besteht. Der Dichtkörper 5 kann radial außen noch Verrippungen oder Verzahnungen 6 aufweisen, die mit entsprechenden Aufrauhungen 7 an der Innenwandung des Doppelnippel zusammenwirken.

Die Vorrichtung besteht ferner aus einer auf das in Figur 1 oben liegende Ende des Doppelnippels 1 aufschraubbaren Druckschraube 8 in Form einer Überwurfmutter mit Anschlagkragen 9, der auf einen Dichtring 10 des Dichtkörpers 5 einwirkt. In der Montagesollage stützt sich der Dichring 10 an der in Zeichnungsfigur 1 oben liegenden Randkante des Doppelnippels 1 ab und wird durch den Anschlagkrage 9 beim Aufschrauben der Druckschraube 8 vorgespannt.

Die Vorrichtung ist insgesamt durch eine entsprechende elektrische Leitung oder dergleichen Langformteil durchgreifbar.

Der Dichtkörper 5 weist im Ausführungsbeispiel 2 einander diametral gegenüberstehende, in Längsrichtung verlaufende Teilungsfugen auf. Der Dichtkörper könnte auch nur eine einzige Teilungsfuge aufweisen, so daß der Dichtkörper an der Teilungsfuge radial auseinander gedrückt werden kann, um ein entsprechendes Kabel oder ein Schlauch oder dergleichen einzulegen.

Der Doppelnippel 1 und auch die Druckschraube 8 sind jeweils aus zwei Teilen mit in Nippellängsrichtung bzw. Druckschraubenlängsrichtung verlaufenden Trennstellen ausgebildet. In der Montagesollage können die Einzelteile der Druckschraube 8 lagerichtig zusammengeführt und zusammengehalten werden, so daß die Druckschraube 8 den beim bestimmungsgemäßen Gebrauch auftretenden Kräften, insbesondere radial nach außen gerichteten Kräften standhalten kann. Beim Zusammenfügen ist es nicht unbedingt erforderlich, daß die Einzelteile des Doppelnippels 1 oder des Stopfens 5 miteinander verbunden werden, sondern diese Teile können auch lose angeordnet sein, sofern die lagerichtige Orientierung sichergestellt ist. Lediglich die Einzelteile der Druckschraube 8 müssen so miteinander verbunden werden, daß sie den auftretenden radial nach außen gerichteten Kräften standhalten kann.

Im Ausführungsbeispiels verlaufen die Trennstellen parallel zur Mittellängsachse von Druckschraube 8, Dichtstopfen 5 und Doppelnippel 1, wobei alle Elemente jeweils aus zwei Halbschalen gebildet sind. Der Dichtkörper 5 besteht aus zwei identischen Halbschalen, während die Halbschalen von Druckschraube 8 und Doppelnippel 1 nur ähnliche Form, nicht aber identische Form aufweisen, insbesondere wegen des durchlaufenden Außen- bzw. Innengewindes.

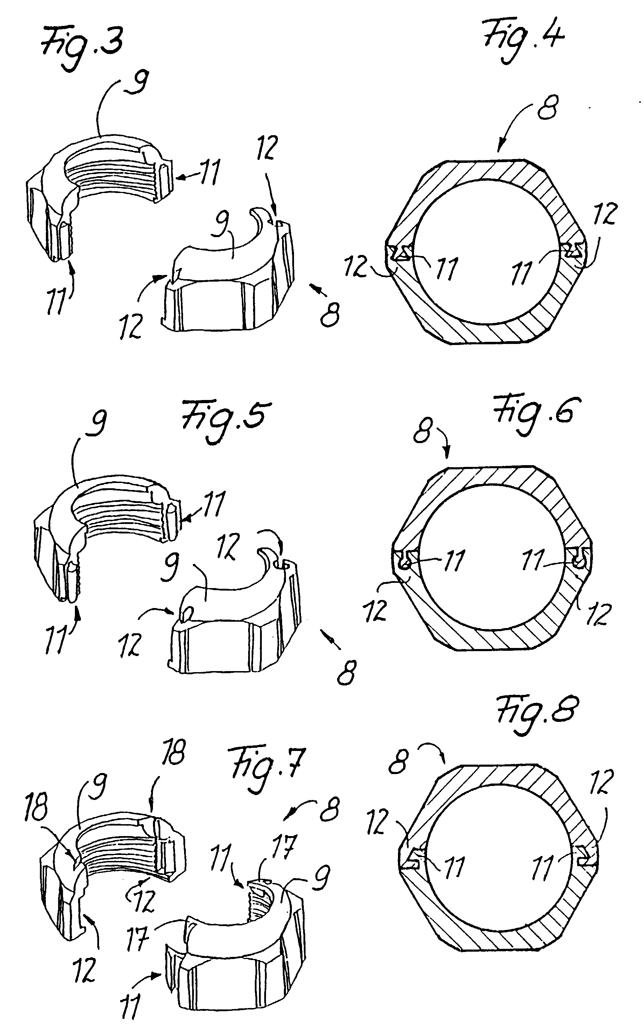

An den Trennstellen der Druckschraube 8 des Dichtkörpers 5 und des Doppelnippels 1 sind jeweils in Montagesollage ineinandergreifende Führungs- und Positioniermittel 11,12, 13, 14, 15, 16 ausgebildet, mittels derer die Teilkörper nach dem ordnungsgemäßen Zusammenfügen in Sollage zueinander gehalten sind. Diese Führungs- und Positioniermittel 11 bis 16 sind jeweils an den Teilkörpern angeformte Elemente. Die Führungs- und Positioniermittel 13, 14 und 15, 16 des Doppelnippels 1 und des Dichtkörpers 5 bestehen aus ineinandersetzbaren Zapfen (14 bzw. 15) und Vertiefungen (13, 16). Die Führungs- und Positioniermittel 11, 12 der Druckschraube sind als in Längsrichtung derselben verlaufende Führungsleisten (11) und Führungskanäle (12) zur Aufnahme der Führungsleisten ausgebildet. Die Form dieser Führungsleisten und Führungskanäle kann unterschiedlich gestaltet sein. Bei der Ausführungsform nach Figur 1 und 2 sind die Führungsleisten (11) etwa L-förmig abgewinkelt und die entsprechenden Aufnahmerinnen passend dazu gestaltet, wie insbesondere auch aus der Schnittansicht gemäß Figur 2 ersichtlich. Bei der Ausführungsform nach Figur 3 und 4 ist die Form nach Art einer Schwalbenschwanzführung ausgebildet. Bei der Ausführungsform gemäß Figur 5 und 6 ist eine hammerkopfartige Führung mit gerundetem Hammerkopf und eine entsprechende Rinnenaufnahmeform gewählt. Bei der Ausführungsform nach Figur 7 und 8 sind rasthakenartige Elemente (11) vorgesehen, die in eine entsprechende Rastaufnahme (12) einsetzbar sind. Bei dieser Ausführungsform können die beiden Einzelteile der Druckschraube 8 radial zusammengefügt und verrastet werden, während bei den anderen Ausführungsformen ein axiales Zusammenfügen der Einzelelemente erforderlich ist.

Wie insbesondere aus der Darstellung gemäß Figur 7 ersichtlich, weist auch der Anschlagkragen 9 der Druckschraube 8 an den Trennstellen radial innenliegende, die Trennstellen des Anschlagkragens 9 überbrückende Rastmittel 17, 18 auf, so daß auch der Anschlagkragen selbst gegen nach radial außen wirkende Kräfte sicher gehalten ist.

Die Teilkörper der Durckschraube 8 und auch des Doppelnippels 1 weisen Positionierungshilfen und Anschlagmittel auf, die sicherstellen, daß die Positionierung der Teilkörper mit zueinander lagerichtigem Gewinde erfolgt. Diese Anschlag- und Arretierungsmittel können beispielsweise in der Form vorgesehen sein, daß bei der Ausführungsform gemäß Figur 1 bis 6 die Aufnahmekanäle (12) für die Führungsleisten (11) in Einsteckrichtung der Führungsleisten (11) hinten geschlossen sind, so daß eine Arretierungs- und Positionierungshilfe gebildet ist. Bei der Ausführungsform gemäß Figur 7 und 8 ist die Rastaufnahme für die rasthakenartigen Befestigungsmittel (11) eng toleriert, so daß beim Eingreifen der Rastmittel eine ordnungsgemäße Ausrichtung und Arretierung erreicht ist.

Wie insbesondere aus Figur 1 ersichtlich kann der Doppelnippel 1 aus zwei an einer Trennstelle über Filmscharnier 19 verbundenen Teilkörpern bestehen. Dabei ist das Filmscharnier 19 im Bereich des Polygonansatzes 3 radial außenliegend an diesem ausgebildet.

Die Druckschraube 8 weist im übrigen radial außen ebenfalls eine polygonartige Ausbildung auf, um Angriffsflächen für einen Schraubenschlüssel oder dergleichen zu bilden.

Anstelle der in der Zeichnung dargestellten Ausführung des Doppelnippels kann auch eine L-förmige Ausbildung vorgesehen sein, so daß ein Winkelverschraubungsteil gebildet ist.

Die Erfindung ist nicht auf die Ausführungsbeispiele beschränkt, sondern im Rahmen der Offenbarung vielfach variabel.

Insbesondere kann die Verbindung der Druckschraubenelemente auch durch stirnseitig angeordnete Riegel erfolgen, die quasi laschenartig die Trennstellen der Einzelelemente überbrücken.

## Patentansprüche

1. Vorrichtung zur abgedichteten Verlegung von Rohren, Leitungen und dergleichen Langformteilen durch Gerätewandungen und dergleichen Bauteile, bestehend aus einem Doppelnippel mit endseitigen Gewindestutzen und dazwischen angeordnetem Polygonansatz für ein Werkzeug, einem Dichtkörper sowie einer Druckschraube, wobei der mittels der auf das eine Ende des Nippels aufschraubbaren Druckschraube in Form einer Überwurfmutter mit Anschlagkragen vorspannbar ist und der vom Rohr, der Leitung oder dem Langformteil durchgreifbar ist, wobei der Dichtkörper mindestens eine in Längsrichtung verlaufende Teilungsfuge aufweist, **dadurch gekennzeichnet, daß** der Doppelnippel (1) und die Druckschraube (8) jeweils aus zwei Teilen mit in Nippellängsrichtung verlaufenden Trennstellen bestehen, wobei die Einzelteile der Druckschraube (8) durch Haltemittel lagerichtig zusammenhaltbar sind, mittels derer die Druckschraube (8) den bei bestimmungsgemäßem Gebrauch auftretenden Kräften, insbesondere radial nach außen gerichteten Kräften standhält, daß an den Trennstellen der Druckschraube (8) des Dichtkörpers (5) und/oder des Doppelnippels (1) jeweils in Montagesollage ineinander greifende Führungs- und Positioniermittel (11 bis 16) angeordnet sind, mittels derer die Teilkörper in der Sollage zueinander gehalten sind, daß die Führungs- und Positioniermittel (11 bis 16) an den Teilkörpern der Elemente angeformt sind, daß als zusätzliche oder ausschließliche Haltemittel an den Trennstellen der Druckschraube (8) in Längsrichtung derselben verlaufende Führungsleisten (11) und Führungskanäle (12) zur Aufnahme der Führungsleisten angeformt sind, daß die Teilkörper der Druckschraube (8) Anschlag- oder Arretierungsmittel aufweisen, die bei Positionierung der Teilkörper mit zueinander lagerichtigem Gewinde wirksam sind und daß der Anschlagkragen (9) der Teilkörper der Druckschraube (8) an den Trennstellen durch die Trennstellen überbrückende Rastmittel zusammenhaltbar ist.

2. Vorrichtung nach Anspruch 1, **dadurch gekennzeichnet, daß** die Trennstellen abgestuft verlaufen.

3. Vorrichtung nach Anspruch 1 oder 2, **dadurch gekenn zeichnet, daß** die Führungs- und Positioniermittel (13 bis 16) des Doppelnippels (1) und/oder des Dichtkörpers (5) aus ineinandersetzbaren Zapfen und Vertiefungen bestehen.

4. Vorrichtung nach einem der Ansprüche 1 bis 3, **dadurch gekennzeichnet, daß** die Form der Führungsleisten und Führungskanäle (11,12) nach Art einer Schwalbenschwanzführung, einer Hammerkopfführung mit gerundeten Hammerkopfkanten oder einer Labyrinthführung ausgebildet sind.

5. Vorrichtung nach einem der Ansprüche 1 bis 4, **dadurch gekennzeichnet, daß** die Teilkörper der Druckschraube (8) durch radial innenliegende, die Trennstellen mindestens in Teilbereichen überbrückende Rasthakenelemente (11,12) zusammenhaltbar sind.

6. Vorrichtung nach einem der Ansprüche 1 bis 5, **dadurch gekennzeichnet, daß** der Anschlagkragen (9) der Teilkörper der Druckschraube (8) an den Trennstellen durch radial innenliegende, die Trennstellen des Anschlagkragens (9) überbrückende Rastmittel (17,18) zusammenhaltbar ist.

7. Vorrichtung nach einem der Ansprüche 1 bis 6, **dadurch gekennzeichnet, daß** der Doppelnippel (1) aus zwei an einer Trennstelle über Filmscharnier (19) verbundenen Teilkörpern besteht.

8. Vorrichtung nach Anspruch 7, dadurch **gekennzeichnet, daß** das Filmscharnier (19) im Bereich des Polygonansatzes (3) radial außenliegend an diesem ausgebildet ist.

9. Vorrichtung nach einem der Ansprüche 1 bis 8, **dadurch gekennzeichnet, daß** der Doppelnippel (1) als Winkelverschraubungsteil ausgebildet ist.

10. Vorrichtung nach einem der Ansprüche 1 bis 9, **dadurch gekennzeichnet, daß** zur Verbindung der Teilkörper der Druckschraube (8) stirnseitig Riegel angeordnet sind, die laschenartig die Trennstelle der Einzelelemente überbrücken.

## Claims

1. Device for the sealed laying of tubes, pipes and similar elongated moulded parts through appliance walls and similar structural components, comprising a double nipple having threaded terminal connecting pieces and a polygonal attachment for a tool disposed therebetween, a sealing body and also a pressure screw, wherein the sealing body can be biased by means of the pressure screw, in the form of a union nut with stop collar, which can be screwed onto the one end of the nipple and which can be passed through by the tube, the pipe or the elongated moulded part, wherein the sealing body has at least one dividing joint extending in the longitudinal direction, characterized in that the double nipple (1) and the pressure screw (8) each comprise two parts having separating points extending in the longitudinal direction of the nipple, the separate parts of the pressure screw (8) being capable of being held together in the correct position by securing means, by means of which the pressure screw (8) withstands the forces, in particular forces directed radially outwards, encountered during intended use, in that guidance and positioning means (11 to 16) which each engage in one another in the intended assembly position are disposed at the separating points of the pressure screw (8), of the sealing body (5) and/or of the double nipple (1), by means of which guidance and positioning means the component bodies are held together in the intended position, in that the guidance and positioning means (11 to 16) are formed onto the component bodies of the elements, in that, as additional or exclusive securing means, guidance strips (11) and guidance channels (12) for receiving the guidance strips extending in the longitudinal direction of the pressure screw (8) are formed onto the latter at its separating points, in that the component bodies of the pressure screw (8) have stopping or restraining means which are operative when the component bodies are positioned with threads in the mutually correct position, and in that the stop collar (9) of the component bodies of the pressure screw (8) is held together at the separating points with latching means which span the separating points.

2. Device according to Claim 1, characterized in that the separating points extend in stepped fashion.

3. Device according to Claim 1 or 2, characterized in that the guidance and positioning means (13 to 16) of the double nipple (1) and/or of the sealing body (5) comprise mutually engaging studs and recesses.

4. Device according to one of Claims 1 to 3, characterized in that the shape of the guidance strips and guidance channels (11, 12) is formed in the manner of a dovetail guide, a hammerhead guide with rounded hammerhead edges or a labyrinthine guide.

5. Device according to one of Claims 1 to 4, characterized in that the component bodies of the pressure screw (8) can be held together by radially internal latching-hook elements (11, 12) which span the separating points at least in part.

6. Device according to one of Claims 1 to 5, characterized in that the stop collar (9) of the component bodies of the pressure screw (8) can be held together at the separating points by radially internal latching means (17, 18) which span the separating points of the stop collar (9).

7. Device according to one of Claims 1 to 6, characterized in that the double nipple (1) comprises two component bodies joined together at a separating point by means of a film-type hinge (19).

8. Device according to Claim 7, characterized in that the film-type hinge (19) is formed in the region of the polygonal attachment (3) radially externally on the latter.

9. Device according to one of Claims 1 to 8, characterized in that the double nipple (1) has a threaded elbow-joint part.

10. Device according to one of Claims 1 to 9, characterized in that, to join the component bodies of the pressure screw (8) locking devices are disposed at the end face which span the separating point of the separate elements in strap fashion.

## Revendications

1. Dispositif permettant de poser de manière étanche des tuyaux, conduites et pièces analogues de forme oblongue à travers des parois d'appareils et éléments de construction analogues, constitué d'un manchon double avec des tubulures filetées terminales et, disposé entre ces tubulures, un épaulement polygonal pour un outil, d'un corps d'étanchéité ainsi que d'une vis de pression, le corps d'étanchéité pouvant être précontraint au moyen de la vis de pression qui peut être vissée sur une des extrémités du manchon et se présente sous la forme d'un écrou-raccord pourvu d'une collerette de butée, et le corps d'étanchéité pouvant être traversé par le tuyau, la conduite ou la pièce de forme oblongue, le corps d'étanchéité présentant en outre au moins une fente de séparation s'étendant en direction longitudinale, **caractérisé** en ce que le manchon double (1) et la vis de pression (8) sont respectivement constitués de deux parties avec des points de séparation s'étendant dans la direction longitudinale du manchon, les parties individuelles de la vis de pression (8) pouvant être maintenues ensemble en position correcte par des moyens de retenue par lesquels la vis de pression (8) résiste aux forces apparaissant lors de l'utilisation conforme, notamment à des forces dirigées radialement vers l'extérieur, en ce que des moyens de guidage et de positionnement (11 à 16) sont respectivement disposés aux points de séparation de la vis de pression (8), du corps d'étanchéité (5) et/ou du manchon double (1), moyens qui s'engagent les uns dans les autres en position de consigne de montage et par lesquels les corps partiels sont maintenus dans la position de consigne les uns par rapport aux autres, en ce que les moyens de guidage et de positionnement (11 à 16) sont formés sur les corps partiels des éléments, en ce que, comme moyens supplémentaires ou exclusifs de retenue, des barrettes de guidage (11), s'étendant dans la direction longitudinale de la vis de pression (8), et des canaux de guidage (12) pour recevoir les barrettes de guidage, sont formés aux points de séparation de la vis de pression (8), en ce que les corps partiels de la vis de pression (8) présentent des moyens de butée ou de blocage qui sont actifs lors du positionnement des corps partiels avec leur filetage en position relative correcte, et en ce que la collerette de butée (9) des corps partiels de la vis de pression (8) peut être maintenue assemblée, aux points de séparation, par des moyens de crantage surmontant les points de séparation.

2. Dispositif selon la revendication 1, **caractérisé** en ce que les points de séparation s'étendent de façon étagée.

3. Dispositif selon la revendication 1 ou 2, **caractérisé** en ce que les moyens de guidage et de positionnement (13 à 16) du manchon double (1) et/ou du corps d'étanchéité (5) consistent en des tenons et des renfoncements pouvant être insérés les uns dans les autres.

4. Dispositif selon l'une des revendications 1 à 3, **caractérisé** en ce que la forme des barrettes de guidage et canaux de guidage (11, 12) est réalisée à la manière d'un guidage en queue d'aronde, d'un guidage en tête de marteau à bords arrondis ou d'un guidage en labyrinthe.

5. Dispositif selon l'une des revendications 1 à 4, **caractérisé** en ce que les corps partiels de la vis de pression (8) peuvent être maintenus assemblés par des crochets de crantage (11, 12) situés radialement à l'intérieur, qui surmontent les points de séparation au moins dans des régions partielles.

6. Dispositif selon l'une des revendications 1 à 5, **caractérisé** en ce que la collerette de butée (9) des corps partiels de la vis de pression (8) peut être maintenue assemblée, aux points de séparation, par des moyens de crantage (17, 18) situés radialement à l'intérieur, qui surmontent les points de séparation de la collerette de butée (9).

7. Dispositif selon l'une des revendications 1 à 6, **caractérisé** en ce que le manchon double (1) est constitué de deux corps partiels assemblés en un point de séparation par l'intermédiaire d'une charnière pelliculaire (19).

8. Dispositif selon la revendication 7, **caractérisé** en ce que la charnière pelliculaire (19) est formée dans la région de l'épaulement polygonal (3), en position radialement extérieure sur ce dernier.

9. Dispositif selon l'une des revendications 1 à 8, **caractérisé** en ce que le manchon double (1) est conçu comme raccord à vis coudé.

10. Dispositif selon l'une des revendications 1 à 9, **caractérisé** en ce que des éléments de verrouillage sont disposés frontalement pour l'assemblage des corps partiels de la vis de pression (8), éléments qui surmontent à la manière de pattes les points de séparation des parties individuelles.
